# EUROPÄISCHE PATENTSCHRIFT

(11) **EP 3 347 194 B1**
(45) Veröffentlichungstag und Bekanntmachung des Hinweises auf die Patenterteilung: **06.11.2019**
(21) Anmeldenummer: 16763248.8
(22) Anmeldetag: 07.09.2016
(51) Int. Cl.: B29C 70/54, B29C 65/48, B29B 11/16, B29C 65/00

(54) **VERFAHREN ZUM VERBINDEN ZWEIER FASERVERSTÄRKTER KUNSTSTOFFBAUTEILE**
METHOD FOR JOINING TWO FIBRE-REINFORCED PLASTIC COMPONENTS
PROCÉDÉ POUR ASSEMBLER DEUX PIÈCES EN MATÉRIAU SYNTHÉTIQUE, RENFORCÉES PAR DES FIBRES

(30) Priorität: 10.09.2015 DE 102015217310
(43) Veröffentlichungstag der Anmeldung: 18.07.2018
(73) Patentinhaber: tesa SE, 22848 Norderstedt (DE)
(72) Erfinder: BERNT, Stephan, 22529 Hamburg (DE); MICHEL, Uwe, 22844 Norderstedt (DE)
(86) Internationale Anmeldenummer: PCT/EP2016/071091
(87) Internationale Veröffentlichungsnummer: WO 2017/042219

(56) Entgegenhaltungen:
- EP-A1- 1 964 902
- EP-A2- 2 602 097
- WO-A1-2015/014646
- US-A- 5 487 853
- US-A1- 2008 160 248
- US-A1- 2012 107 129
- US-A1- 2015 056 433

## Beschreibung

Die vorliegende Erfindung betrifft ein Verfahren zum Verbinden zweier faserverstärkter Kunststoffbauteile.

Viele Kompositbauteile, teilweise mit komplexen geometrischen Strukturen, werden hergestellt, indem aushärtbares Material wie zum Beispiel Epoxid- oder Polyesterharze in eine Form eingebracht wird, was anschließend ausgehärtet wird.

Das am weitesten verbreitete Verfahren ist das vacuum-assisted resin transfer molding (VARTM), auch als vacuum infusion oder einfach nur Harzinfusionsprozess genannt. Hierbei wird ein Gelege aus Fasermatten (zum Beispiel Glas oder Kohlefaser) in ein Vakuum gebracht (zumeist eingeschlossen in einem Vakuumsack) und durch den Unterdruck mit einem Harz-Härter-Gemisch (Matrix, zumeist auf Epoxid-Basis) getränkt. Dieses wird für gewöhnlich bei erhöhten Temperaturen (∼70 bis 120 °C) für einige Stunden ausgehärtet.

Bekannt ist auch das RTM (Resin Transfer Moulding).

Das Resin Transfer Moulding ist ein Verfahren zur Herstellung von Formteilen aus Duroplasten und Elastomeren. Im Vergleich zum Pressen wird hierbei die Formmasse mittels Kolben von einer meist beheizten Vorkammer über Verteilerkanäle in das Formnest eingespritzt, worin sie unter Wärme und Druck aushärtet.

Als Formmasse können Formaldehydharze (Phenolharze oder Aminoplaste) und Reaktionsharze (Polyester wie PET oder Epoxidharze) mit kleinen Füllstoffpartikeln und Elastomere verwendet werden.

Zu Beginn eines Zyklus befindet sich eine vorplastifizierte und dosierte Formmasse in der Vorkammer. Zunächst wird das Werkzeug geschlossen. Danach wird die Formmasse ins Werkzeug eingespritzt und für eine bestimmte Zeit im Werkzeug belassen. Bei dieser sogenannten Verweilzeit kommt es zum Reagieren oder Vulkanisieren der Formmasse. Sie ist dabei von verschiedenen Faktoren abhängig (Harztyp, Füllstoff, Verarbeitungsdruck und -temperatur). Ist die Verweilzeit beendet, kann das Werkzeug geöffnet werden. Die zuvor eingefüllte Formmasse ist nun fest (ausgehärtet) und wird jetzt als Formteil bezeichnet. Dieses kann nun aus dem Werkzeug entformt werden. Danach erfolgt die Reinigung des Werkzeugs und ein neuer Zyklus kann beginnen.

Die Menge der beim Einpressen und Nachpressen benötigen Formmasse sollte dabei immer größer als das Volumen des endgültigen Formteils sein, damit das Werkzeug vollständig befüllt wird. Somit wird garantiert, dass das Formteil vollständig ausgebildet ist und keine Luft eingepresst wird. Die dabei in der Vorkammer überschüssige, zurückgebliebene Formmasse, auch als Restkuchen bezeichnet, muss vor dem Beginn des neuen Zyklus entfernt werden und durch neue Formmasse ersetzt werden.

Um Lufteinschlüsse zu vermeiden, wird meist zusätzlich die Kavität (Formhohlraum) evakuiert.

Als Formarten sind feste Formen, weiche Formen und Mischformen bekannt.

Als Injektionsharze werden Harze verwendet, die eine niedrige Viskosität besitzen. Dadurch bleibt der Strömungswiderstand beim Durchströmen der Form gering, und es sind kleinere Druckdifferenzen zum Füllen notwendig. Reaktionsharze für RTM-Verfahren werden als spezielle Injektionsharze angeboten, die aus einer Harz- und Härterkomponente bestehen. Niedrigreaktive Harzsysteme können bereits vor der Infusion gemischt werden. Sollen hochreaktive Harzsysteme verwendet werden, so können Harz und Härter erst unmittelbar in der Infusionsleitung beziehungsweise der Form gemischt werden. Auf diese Weise sind geringere Taktzeiten möglich. Verfahren, bei denen die Injektionsharz-Komponenten erst unmittelbar vor der Injektion gemischt werden, sind als RIM-Verfahren (Reaction Injection Moulding) bekannt.

Weitere Details lassen sich dem Chemielexikon Römpp entnehmen, und zwar unter dem Stichwort "Spritzgießen" (2013 Georg Thieme Verlag, Dokumentkennung RD-19-03499, letzte Aktualisierung: Juli 2011).

In der Flugzeugindustrie sind die Ansprüche an die hergestellten Bauteile deutlich größer als beispielsweise in der Windindustrie. Diese müssen eine nahezu perfekte Uniformität aufweisen, was beispielsweise die Abwesenheit von Luftblasen einschließt. Um dies zu erreichen, wird das Bauteil zum Aushärten und homogenisieren in einen Autoklav verbracht, in dem es 24 Stunden bei ∼230 °C verbleibt. Zusätzlich liegt ein Druck im Autoklav von ∼17 bar an (zusätzlich zu dem 1 bar Unterdruck im Vakuumsack des Bauteils ist dieses also einem Gesamtdruck von 18 bar ausgesetzt). Anschließend ist das Bauteil bereit für eine Weiterverarbeitung.

Das Fügen von mehreren Einzelteilen zu einem Gesamtteil kann auf unterschiedlichste Arten geschehen. Gängig ist beispielsweise das "mechanische" Verbinden von Bauteilen mittels Schrauben, Bolzen o.ä. Der Nachteil dieser Methode ist, dass zur Aufnahme von Bolzen, Schrauben etc. immer ein Loch vorhanden sein muss, welches entweder gebohrt wird oder schon beim Bauen des Teils implementiert wird. Das Loch oder die Bohrung beziehungsweise die spätere Verbindungsstelle stellen immer einen Schwachpunkt im Bauteil dar. Das heißt, bei mechanischer Belastung wird die Verbindungsstelle besonders stark beansprucht und kann Verschleiß zeigen. Vor allem in der Flugzeugindustrie ist solch ein Schwachpunkt inakzeptabel.

Um dieses Problem zu lösen, wird vermehrt auf Verklebungen eingesetzt. Verklebt wird hier mittels des Epoxidharzes, welches auch zum Bauen der Einzelteile verwendet wird. Würde man jedoch zwei fertige Bauteile (die ihrerseits aus einer Harzmatrix mit eingebetteten Glas- oder Kohlefasern bestehen, wobei die eingebetteten Glas- oder Kohlefasern vollständig von Harz umgeben sind) miteinander verkleben, so würde man jeweils die ausgehärteten Harzoberflächen der Bauteile miteinander verkleben.

Da diese Verklebung wiederum einen Schwachpunkt darstellt, klebt man die "nackten" Fasern beider Oberflächen mit einem Harz zusammen. Die Fasern sind mit einem chemischen Agens (der sogenannten Schlichte) umhüllt, so dass die Anbindung Harz an Faser (beziehungsweise Schlichte) eine nahezu "unzerstörbare Verbindung" eingeht. Allerdings muss man sich hier behelfen, um die "nackten" Fasern freizulegen. Gängig ist beispielsweise die Methode mittels Laserablation die oberste Harzschicht bis zu den Fasern abzutragen.

Die Methode der Laserablation ist deutlich präziser und weniger destruktiv als einfaches Schleifen. Ein weiterer Vorteil für die Festigkeit der späteren Verbindung ist die durch den Laser aktivierte Oberfläche, an der eine spätere Verklebung erleichtert wird.

Allerdings ist das benötigte Equipment auch sehr teuer, und es muss aufgrund möglicher Laserstreuung sehr stark auf Arbeitsschutz geachtet werden.

Aus der EP 2 602 097 A2 ist eine Faserverbundbauteilanordnung mit mindestens zwei plattenförmigen Faserverbundbauteilen bekannt, die jeweils aus in Kunstharz eingebetteten Fasern hergestellt und stoffschlüssig über eine dazwischen angeordnete Klebschicht und zusätzlichen mechanischen Verstärkungsmitteln miteinander verbunden sind.

Des Weiteren sind diverse andere Verfahren bekannt, die nachträglich eine Abtragung des Matrixmaterials erlauben, nicht aber zu einer Abtragung beziehungsweise Beschädigung der freizulegenden Fasern führen. Hier ist beispielsweise auch ein chemischer Ätzprozess denkbar, wobei dessen Nachteile auf der Hand liegen: Vor allem der Arbeitsschutz (gegen Flüssigkeiten oder sogar gegen auftretende gasförmige Verbindungen sowie ein extra gekapselter Raum) ist nicht zu vernachlässigen und oftmals mit immensen Kosten verbunden.

Aufgabe der vorliegenden Erfindung ist, ein Verfahren zum Verbinden zweier faserverstärkte Kunststoffbauteile anzugeben, das ohne besondere Maßnahmen, die zur Einhaltung des Arbeitsschutzes getroffen werden müssen, um Arbeiter gegen flüssige und/oder gasförmige Stoffe sowie gegen eventuell auftretende (lungengängige) Partikel zu schützen, auskommt

Gelöst wird diese Aufgabe durch ein Verfahren, wie es im Hauptanspruch niedergelegt ist. Gegenstand der Unteransprüche sind vorteilhafte Weiterentwicklungen des Erfindungsgegenstandes.

Demgemäß betrifft die Erfindung ein Verfahren zum Verbinden zweier faserverstärkter Kunststoffbauteile, umfassend die folgenden Schritte:
- Herstellen eines ersten faserverstärkten Kunststoffbauteils, indem ein Gelege aus Fasermatten vorgelegt wird, das mit einem Harz-Härter-Gemisch getränkt wird, das seinerseits anschließend ausgehärtet wird, wobei der Teil der Oberfläche des ersten faserverstärkten Kunststoffbauteils, der später mit dem zweiten faserverstärkten Kunststoffbauteil verklebt werden soll (im Folgenden auch Fügefläche genannt), vor der Tränkung der Fasermatten mit dem Harz-Härter-Gemisch mit einem Klebeband maskiert wird
- Herstellen eines zweiten faserverstärkten Kunststoffbauteils nach dem oben genannten Schritten, wobei der Teil der Oberfläche des zweiten faserverstärkten Kunststoffbauteils, der später mit dem ersten faserverstärkten Kunststoffbauteil verklebt werden soll, ebenfalls vor der Tränkung der Fasermatten mit dem Harz-Härter-Gemisch mit einem Klebeband maskiert wird
- Entfernen der Klebebänder von den beiden fertigen faserverstärkten Kunststoffbauteilen
- Inkontaktbringen der beiden Fügeflächen
- Einbringen eines Harz-Härter-Gemisches zwischen den beiden Fügeflächen
- Aushärten des Harz-Härter-Gemisches

Das Klebeband weist eine Trägerfolie auf, auf die einseitig eine Klebemasse, insbesondere Selbstklebemasse aufgebracht ist.

Die Trägerfolie des Klebebands besteht aus Fluorpolymeren, aus Polyethylenpolymeren, aus unverstrecktem Polypropylen oder aus Metall, und die Klebemasse ist eine Acrylat- oder Silikonklebemasse.

Für die Fasermatten finden bevorzugt Glas- oder Kohlenstofffasern Verwendung.

Die Fasermatten sind zumeist Gelege aus ungezwirnten und ungetengelten oder gezwirnten oder getengelten Filamenten. Die Filamente bestehen im Allgemeinen aus hochfesten Fasern geringer Reissdehnung.

Im Sinne dieser Offenbarung wird unter einem Filament ein Bündel paralleler, gerader Einzelfasern verstanden, in der Literatur auch oft als Multifilament bezeichnet. Gegebenenfalls kann dieses Faserbündel durch Verdrehen in sich verfestigt werden, dann spricht man von gesponnenen oder gezwirnten Filamenten. Alternativ kann das Faserbündel durch Verwirbeln mit Druckluft oder Wasserstrahl in sich verfestigt werden.

Die Idee des erfindungsgemäßen Verfahrens ist, dass die nackten Fasern (beziehungsweise die Stelle, die später mit einem anderen Bauteil verbunden werden soll) vor dem Harzinfusionsprozess mit dem Klebeband abgedeckt werden. Anschließend wird wie oben beschrieben der Harzinfusionsprozess, vorzugsweise mit anschließender Autoklavierung, durchgeführt. Nach Entfernen des Bauteils aus dem bevorzugt eingesetzten Autoklav und aus dem ebenfalls bevorzugt eingesetzten Vakuumsack wird das aufgebrachte Klebeband entfernt. Da das Klebeband direkt auf die Fasern geklebt war, sind diese nach Entfernung des Klebebands wieder an der freien Oberfläche zu sehen. Das heißt, das Klebeband hat diese während des gesamten Prozesses maskiert.

Die Anforderungen an ein einschlägiges Klebeband sind hoch, da das Klebeband die bei der Herstellung von faserverstärkten Kunststoffbauteilen üblichen Konditionen aushalten muss. Das Klebeband sollte 230 °C für 24 h unter Luftausschluss (da im Vakuumsack) im Autoklav bei 18 bar "überstehen". Zusätzlich muss es rückstandsfrei entfernbar sein. Rückstände jedweder Art beeinflussen eine spätere effektive Verklebung maßgeblich. Zusätzlich wird das Klebeband während des Infusionsprozesses mit Harz und Härter angeflossen, welches direkt an der Grenzschicht zum Klebeband aushärtet.

Das Klebeband darf die Eigenschaften des Kompositmaterials (durch Migration von Bestandteilen o.ä.) nicht beeinflussen.

Sowohl Träger als auch Klebemasse müssen daher der hohen Temperatur, der Dauer und dem Druck standhalten.

Vorzugsweise enthält die Trägerfolie zu 90 Gew.-%, weiter vorzugsweise 95 Gew.-% Fluorpolymere (bezogen auf die Gesamtzusammensetzung der Trägerfolie).

Weiter vorzugsweise bestehen die die Trägerfolie bildenden Polymere zu 100 Gew.-% aus Fluorpolymeren. Den Fluorpolymeren können zusätzlich optional die später geschilderten Additive zugesetzt sein. Letztere sind - wie gesagt - nicht zwingend, sondern können auch nicht verwendet werden.

Als Fluorpolymere finden insbesondere PTFE (Polytetrafluorethylen (Teflon)), PFA (Perfluoralkoxy-Polymere) oder FEP (Poly(tetrafluorethylen-co-hexafluorpropylen)) oder Gemische der genannten Fluorpolymere Verwendung, weil von diesen bekannt ist, dass diese für Hochtemperaturanwendungen geeignet sind.

ETFE (Poly(ethylen-co-tetrafluoroethylen)), ECTFE (Copolymer bestehend aus Ethylen und Chlortrifluorethylen) oder PVDF (Poly(1,1-difluorethen)) oder Gemische der genannten Fluorpolymere sind auch geeignet, aber weniger bevorzugt.

Diese haben aber unter Umständen einen geringen Schmelzpunkt/Zersetzungspunkt, so dass hier hochgiftige Zersetzungsstoffe entstehen können und die Folie stark zusammenschrumpft.

Als Fluorpolymere oder fluorhaltige Polymere werden im Rahmen dieser Offenbarung sowie allgemein sowohl fluorhaltige Polymere mit ausschließlich Kohlenstoffatomen als auch solche mit Heteroatomen in der Hauptkette bezeichnet. Vertreter der ersten Gruppe sind Homo- und Copolymere olefinisch-ungesättigter fluorierter Monomeren.

Die Einteilung der aus diesen Monomeren resultierenden Fluorpolymere erfolgt in die Kategorien Polytetrafluorethylen, Fluorthermoplaste, Fluorkautschuke und die daraus durch Vulkanisation gewonnenen Fluorelastomere. Wichtigste Vertreter der Fluorpolymere mit Heteroatomen in der Hauptkette sind die Polyfluorsiloxane und Polyfluoralkoxyphosphazene.

PTFE bezeichnet Fluorpolymere, die aus Tetrafluorethen-Monomeren zusammengesetzt sind.

PFA bezeichnet Copolymere mit Gruppierungen wie 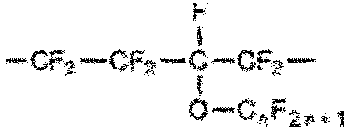 als Grundeinheiten [Poly(tetrafluorethylen-co-perfluoralkylvinylether)]. PFA resultieren aus der Copolymerisation von Tetrafluorethen und Perfluoralkoxyvinylethern (zum Beispiel Perfluorvinylpropylether, *n* = 3).

FEP, auch fluoriertes Ethylen-Propylen-Copolymer genannt, bezeichnet Copolymere aus Tetrafluorethen und Hexafluorpropen.

PVF ist ein aus Vinylfluorid hergestelltes Polymer (Polyvinylfluorid).

PCTFE ist ein aus Chlortrifluorethylen aufgebautes Polymer (Polychlortrifluorethylen). ETFE ist ein fluoriertes Copolymer bestehend aus den Monomeren Chlortrifluorethylen oder auch Tetrafluorethylen und Ethylen.

ECTFE ist ein Copolymer bestehend aus Ethylen und Chlortrifluorethylen.

PVDF bezeichnet aus 1,1-Difluorethen (Vinylidenfluorid) herstellbare Fluorpolymere.

Die Fluorpolymere sind vorzugsweise nicht mit weiteren Polymeren wie olefinische Polymere wie Homo- oder Copolymere von Olefinen wie Ethylen, Propylen oder Butylen (der Begriff Copolymer ist hier sinngemäß dahingehend zu verstehen, dass er Terpolymere mit einschließt), Polypropylenhomopolymere oder Polypropylencopolymere einschließlich der Block-(Impact-) und Randompolymere oder Polyester wie insbesondere Polyethylenterephthalat (PET), Polyamide, Polyurethane, Polyoxymethylen, Polyvinylchlorid (PVC), Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES), Polyimid (PI), Polyarylensulfide und/oder Polyarylenoxide vermischt.

Die Polymere zur Bildung der Trägerfolie können in Reinform oder in Blends mit Additiven wie Antioxidantien, Lichtschutzmitteln, Antiblockmitteln, Gleit- und Verarbeitungshilfsmitteln, Füllstoffen, Farbstoffen, Pigmenten, Treib- oder Nucleierungsmitteln vorliegen.

Vorzugsweise weist die Folie keines der genannten Additive auf.

Weiterhin sind Träger aus einer Metallfolie, insbesondere aus Aluminium, geeignet.

Überraschenderweise eignet sich weiterhin Polyethylen (PE) als Trägerfolie, zumindest bei der bevorzugten Durchführung des Verfahrens im Vakuum. Dies ist überraschend, da beispielsweise HDPE einen Schmelzpunkt von ∼130 bis 145 °C besitzt und sich bei Temperaturen von 230 °C zersetzt. Unter Luftausschluss scheint dieser Zersetzungsprozess nicht aufzutreten. Das PE schmilzt, wobei die Schmelze während des Autoklavierprozesses an Ort und Stelle fixiert durch den Vakuumsack verbleibt und bei Verringerung der Temperatur wieder erstarrt.

Bevorzugt eingesetzt wird weiterhin HDPE, also schwach verzweigte Polymerketten, daher hohe Dichte zwischen 0,94 g/cm³ und 0,97 g/cm³, LDPE, also stark verzweigte Polymerketten, daher geringe Dichte zwischen 0,915 g/cm³ und 0,935 g/cm³ und/oder LLDPE, also ein lineares Polyethylen niederer Dichte, dessen Polymermolekül nur kurze Verzweigungen aufweist. Diese Verzweigungen werden durch Copolymerisation von Ethen und höheren α-Olefinen (typischerweise Buten, Hexen oder Octen) hergestellt. Der Anteil an Polyethylen in HDPE, LDPE und LLDPE beträgt vorzugsweise 99 Gew.-% oder mehr.

Vorzugsweise enthält die Trägerfolie zu 95 Gew.-% Polyethylenpolymere (bezogen auf die Gesamtzusammensetzung der Trägerfolie).

Vorzugsweise bestehen die die Trägerfolie bildenden Polymere zu 100 Gew.-% aus Polyethylen. Den Polyethylenpolymeren können zusätzlich optional die später geschilderten Additive zugesetzt sein. Letztere sind - wie gesagt - nicht zwingend, sondern können auch nicht verwendet werden.

In einer Variante der Erfindung wird als Trägermaterial unverstrecktes Polypropylen eingesetzt.

Vorzugsweise enthält die Trägerfolie zu 95 Gew.-% Polypropylenpolymere (bezogen auf die Gesamtzusammensetzung der Trägerfolie).

Vorzugsweise bestehen die die Trägerfolie bildenden Polymere zu 100 Gew.-% aus Polypropylen. Den Polypropylenpolymeren können zusätzlich optional die später geschilderten Additive zugesetzt sein. Letztere sind - wie gesagt - nicht zwingend, sondern können auch nicht verwendet werden

Gemäß einer bevorzugten Ausführungsform besteht die Trägerfolie aus einer einzigen Folienlage.

Gemäß einer bevorzugten Ausführungsform liegt die Dicke der Trägerfolie zwischen 30 und 200 µm, vorzugsweise zwischen 40 und 100 µm, weiter vorzugsweise zwischen 40 und 60 µm.

Vorzugsweise ist die auf der Trägerfolie aufgebrachte Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Als temperaturstabile Klebemasse kommen gemäß einer vorteilhaften Variante des Verfahrens Silikonklebemassen zum Einsatz, weil sich diese grundsätzlich bekanntermaßen ganz hervorragend für Hochtemperaturanwendungen und die rückstandsfreie Entfernbarkeit eignen.

Vorzugsweise werden die silikonbasierenden Klebemassen mit einem Träger aus einer Polyethylenfolie eingesetzt.

Weiterhin sind acrylatbasierende Klebemassen geeignet. Vorzugsweise werden die acrylatbasierenden Klebemassen mit einem Träger aus einer Polyethylenfolie eingesetzt.

"Silikon-" oder "acrylatbasierend" bedeutet hier, dass die das Grundgerüst der Klebemasse bildenden Polymere (also ohne Klebharze, Weichmacher oder weitere Zuschlagstoffe und Additive) zu mindestens 50 Gew.-%, vorzugsweise 75 Gew.-%, weiter vorzugsweise zu 90Gew.-% aus Silikone beziehungsweise Acrylaten bestehen.

Es wird weiter vorzugsweise ein Polyacrylat eingesetzt, welches auf die folgende Eduktmischung, enthaltend Monomere der folgenden Zusammensetzung, zurückgeführt werden kann:
A1) Acrylsaureester und/oder Methacrylsaureester der folgenden Formel

   CH₂=C(R¹)(COOR²)

   wobei R¹ = H oder CH₃ und R² eine Alkylkette mit 1 bis 14 C-Atomen ist, mit einem Anteil von 65 bis 98 Gew.-%,
A2) Acrylate und/oder Methacrylate, deren Alkoholkomponente zumindest eine primäre Hydroxyl- oder Carboxyl-Gruppe enthält und/oder mit Acrylaten copolymerisierbare Vinylverbindungen, die zumindest eine primare Hydroxyl- oder Carboxyl-Gruppe enthalten, mit einem Anteil von 1 bis 20 Gew.-%,
A3) mehrfachfunktionelle Isocyanat-Vernetzer, welche mit thermisch reversiblen Schutzgruppen blockiert vorliegen, mit einem Anteil von 1 bis 10 Gew.-%
A4) und, sofern sich die Anteile von A1), A2) und A3) nicht zu 100 Gew.-% addieren, olefinisch ungesättigte Monomere mit funktionellen Gruppen, mit einem Anteil von 0 bis 15 Gew.-%.

Die Monomere werden bevorzugt dermaßen gewählt, dass die resultierenden Polymere bei Raumtemperatur als Haftklebemassen eingesetzt werden können, insbesondere derart, dass die resultierenden Polymere haftklebrige Eigenschaften entsprechend dem "Handbook of Pressure Sensitive Adhesive Technology' von Donatas Satas (van Nostrand, New York 1989, Seite 444 bis 514) besitzen.

Diese Acrylatklebemassen sind besonders vorteilhaft, bei diesen wird durch Zugabe von sogenannten blockierten Isocyanaten eine nachträgliche Vernetzung der Klebemasse induziert.

Diesen Vorgang kann man soweit führen, dass die Klebemasse komplett durchvernetzt, dadurch hart wird und das Klebeband sich rückstandsfrei von der Oberfläche entfernen lässt.

Die Begriffe "Blockierte Isocyanate" beziehungsweise "Verkappte Isocyanate" beschreiben den Umstand, dass Additionsverbindungen von hochreaktiven Isocyanaten mit Alkoholen (Urethane) und Aminen (Harnstoffe) bei höheren Temperaturen diese Isocyanate wieder freisetzen können.

Blockierte Isocyanate entstehen durch Umsetzung von Isocyanaten mit H-aciden Verbindungen. Sie sind thermisch instabil und zersetzten sich (deblockieren) oberhalb von etwa 120 °C wieder zu Isocyanaten. Sie reagieren erst bei Erhitzung weiter, wodurch sich der Zeitpunkt der Reaktion besser steuern lässt. Blockierte Isocyanate werden als Flexibilisator in Epoxidsystemen eingesetzt. Diese Produkte basieren auf flexiblen Polyurethan-Prepolymeren, die mit Phenol blockiert sind. Die Deblockierung findet durch Reaktion mit dem Aminhärter statt, so dass ein Harnstoff entsteht, der in das Epoxidnetzwerk eingebaut wird und als Weichsegment fungiert.

Es werden Blockierungsmittel mit verschiedenen Deblockierungstemperaturen eingesetzt. Die Temperatur ist jedoch auch von der chemischen Struktur des Isocyanates und der Flüchtigkeit des Blockierungsmittels abhängig. Zinn- und Bismut-Verbindungen senken die Deblockierungstemperatur um einige Grad Celsius.

Die blockieren Isocyanate (BI) können auf zweierlei Wege funktionieren: Zum einen liegen freie Isocyanatgruppen im Molekül vor, sind jedoch von sehr voluminösen Seitengruppen so stark abgeschirmt, dass sie bei Raumtemperatur oder leicht erhöhten Temperaturen nicht reagieren (können). Erst bei hoher Temperatur und erleichterter Drehbarkeit innerhalb des Moleküls und höherer Diffusionsgeschwindigkeiten sind diese Gruppen reaktiv und können zu einer Vernetzung der Masse führen. Zum anderen sind die Isocyanatgruppen mittels einer Schutzgruppe in andere Verbindungen überführt, dadurch blockiert und unreaktiv. Durch Erhöhung der Temperatur über eine "Trigger-Temperatur" werden die Schutzgruppen abgespalten und die freien Isocyanate liegen vor, die wiederrum zu einer Vernetzung der Klebemasse führen können.

Letztendlich eignen sich für diese Variante Acrylatmassen, die über geeignete Anbindungsstellen für Isocyanate verfügen (zum Beispiel Acrylsäuregruppen oder Hydroxyacrylate). Es wird dabei vorzugsweise mit den blockierten Isocyanaten stöchiometrisch passend zu den Vernetzergruppen gearbeitet, um unliebsame Effekte (zum Beispiel Umesterung) zu unterbinden.

Besonders vorteilhaft sind die oben angegebenen Klebemassen mit einem Träger aus einer Polyethylenfolie kombiniert.

Es wird weiter vorzugsweise ein Polyacrylat eingesetzt, welches auf die folgende Eduktmischung, enthaltend Monomere der folgenden Zusammensetzung, zurückgeführt werden kann:
A1) Acrylsaureester und/oder Methacrylsaureester der folgenden Formel

   CH₂=C(R¹)(COOR²)

   wobei R¹ = H oder CH₃ und R² eine Alkylkette mit 1 bis 14 C-Atomen ist, mit einem Anteil von 75 bis 98 Gew.-%,
A2) Acrylate und/oder Methacrylate, deren Alkoholkomponente zumindest eine primäre Hydroxyl- oder Carboxyl-Gruppe enthält, und/oder mit Acrylaten copolymerisierbare Vinylverbindungen, die zumindest eine primare Hydroxyl- oder Carboxyl-Gruppe enthalten, mit einem Anteil von 1 bis 5 Gew.-%,
A3) Acrylate und/oder Methacrylate, deren Alkoholkomponente zumindest eine Epoxy-Gruppe enthält, und/oder mit Acrylaten copolymerisierbare Vinylverbindungen, die zumindest eine Epoxy-Gruppe enthalten, mit einem Anteil von 1 bis 5 Gew.-%,
A4) und, sofern sich die Anteile von A1), A2) und A3) nicht zu 100 Gew.-% addieren, olefinisch ungesättigte Monomere mit funktionellen Gruppen, mit einem Anteil von 0 bis 15 Gew.-%.

Die Monomere werden bevorzugt dermaßen gewählt, dass die resultierenden Polymere bei Raumtemperatur als Haftklebemassen eingesetzt werden können, insbesondere derart, dass die resultierenden Polymere haftklebrige Eigenschaften entsprechend dem "Handbook of Pressure Sensitive Adhesive Technology' von Donatas Satas (van Nostrand, New York 1989, Seite 444 bis 514) besitzen.

Diese Polyacrylate enthalten freie Acrylsäuregruppen, jedoch auch einpolymerisiertes Glycidylmethacrylat. Dieses fungiert als reaktive Gruppe für die freien Acrylsäuregruppen und führt zu einer weiteren Vernetzung des Polymers. Dies geht so weit, dass die Klebemasse komplett verlackt (also hart wird) und keinen spürbaren Finger-Tack mehr aufweist. Durch den Verlackungsprozess ist es nun möglich, das Klebeband rückstandsfrei von der Oberfläche zu entfernen.

Besonders vorteilhaft sind die oben angegebenen Klebemassen mit einem Träger aus einer Polyethylenfolie kombiniert.

Es wird weiter vorzugsweise ein Polyacrylat eingesetzt, welches auf die folgende Eduktmischung, enthaltend Monomere der folgenden Zusammensetzung, zurückgeführt werden kann:
A1) Acrylsäureester und/oder Methacrylsäureester der folgenden Formel

   CH₂=C(R¹)(COOR²)

   wobei R¹ = H oder CH₃ und R² ein Alkylrest mit 1 bis 14 C-Atomen ist, mit einem Anteil von 50 bis 95 Gew.-%,
A2) Acrylate und/oder Methacrylate, deren Alkoholkomponente zumindest eine primäre Hydroxyl- oder Carboxyl-Gruppe enthält, und/oder mit Acrylaten copolymerisierbare Vinylverbindungen, die zumindest eine primäre Hydroxyl- oder Carboxyl-Gruppe enthalten, mit einem Anteil von 5 bis 30 Gew.-%,
A3) Acrylate und/oder Methacrylate, deren Alkoholkomponente zumindest eine Epoxy-Gruppe enthält, und/oder mit Acrylaten copolymerisierbare Vinylverbindungen, die zumindest eine Epoxy-Gruppe enthalten, mit einem Anteil von 0 bis 5 Gew.-%,
A4) und, sofern sich die Anteile von A1), A2) und A3) nicht zu 100 Gew.-% addieren, olefinisch ungesättigte Monomere mit funktionellen Gruppen, mit einem Anteil von 0 bis 15 Gew.-%.

Der Alkylrest kann linear, verzweigt oder cyclisch sein.

Die Monomere werden bevorzugt dermaßen gewählt, dass die resultierenden Polymere bei Raumtemperatur als Haftklebemassen eingesetzt werden können, insbesondere derart, dass die resultierenden Polymere haftklebrige Eigenschaften entsprechend dem "Handbook of Pressure Sensitive Adhesive Technology' von Donatas Satas (van Nostrand, New York 1989, Seite 444 bis 514) besitzen.

Die beschriebenen Polyacrylate sind acrylsäurefrei. Diese sind hochtransparent. Das Besondere an dieser Art von Klebemassen ist, dass diese bei hohen Temperaturen nachvernetzen beziehungsweise verlacken. Dies geschieht vornehmlich durch das einpolymerisierte 2-Hydroxyethylacrylat. Die Hydroxylgruppe kann bei erhöhten Temperaturen mit den Estergruppen der anderen Monomere intra- und intermolekular in Umesterungsreaktionen reagieren. Diese zusätzlichen Knotenpunkte im Polymergerüst führen zu einer drastisch gesteigerten Vernetzung der Klebemasse. Dies geht soweit, dass die Klebemasse verlackt und jeglichen Tack verliert. Dies ist der Garant dafür, dass die Klebemasse rückstandsfrei von der Oberfläche entfernbar ist.

Bevorzugt werden olefinisch ungesättigte Monomere mit funktionellen Gruppen, die aus der folgenden Aufzählung ausgewählt sind: Hydroxy-, Carboxy-, Sulfonsäure-, oder Phosphonsäuregruppen, Säureanhydride, Epoxide, Amine.

Besonders bevorzugte Beispiele für diese Monomere sind Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat. Besonders vorteilhaft sind die oben angegebenen Klebemassen mit einem Träger aus einer Polyethylenfolie kombiniert.

Zur weiteren Verbesserung der Eigenschaften können die Klebemasseformulierungen optional mit Lichtschutz- oder primären und/oder sekundären Alterungsschutzmitteln abgemischt sein. Als Alterungsschutzmittel können Produkte auf Basis sterisch gehinderter Phenole, Phosphite, Thiosynergisten, sterisch gehinderter Amine oder UV-Absorber eingesetzt werden. Bevorzugt eingesetzt werden primäre Antioxidantien wie zum Beispiel Irganox 1010 oder Irganox 254, allein oder in Kombination mit sekundären Antioxidantien wie zum Beispiel Irgafos TNPP oder Irgafos 168. Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Ganz besonders vorteilhaft haben sich Alterungsschutzmittel erwiesen, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta-Stellung zur OH-Gruppe mit Thioalkylketten substituiert ist, wobei das Schwefelatom auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-o-cresol, 4,6-Bis(undecylthiomethyl)-o-cresol, 4,6-Bis(decylthiomethyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten.

Die Menge des zugesetzten Alterungsschutzmittels bzw. Alterungsschutzmittelpaketes sollte in einem Bereich zwischen 0,1 und 10 Gew.-%, bevorzugt in einem Bereich zwischen 0,2 und 5 Gew.-%, besonders bevorzugt in einem Bereich zwischen 0,5 und 3 Gew.-% bezogen auf die Gesamtzusammensetzung der Klebemasse liegen.

Zur Verbesserung der Verarbeitungseigenschaften können der Klebemassen zur Formulierung weitere übliche Prozesshilfsmitteln wie Rheologieadditiven (Verdicker), Entschäumern, Entlüftern, Netzmitteln oder Verlaufsmitteln zugemischt werden. Geeignete Konzentrationen liegen im Bereich von 0,1 bis zu 5 Gew.-% bezogen auf die Gesamtzusammensetzung der Klebemasse.

Füllstoffe (verstärkend oder nicht verstärkend) wie Siliciumdioxide (sphärisch, nadelförmig, plättchenförmig oder unregelmäßig wie die pyrogenen Silicas), Glas als Voll- oder Hohlkugeln, Mikroballons, Kalziumcarbonate, Zinkoxide, Titandioxide, Aluminiumoxide oder Aluminiumoxidhydroxide können sowohl der Justierung der Verarbeitbarkeit als auch der klebtechnischen Eigenschaften dienen. Geeignete Konzentrationen liegen im Bereich von 0,1 bis zu 20 Gew.-% bezogen auf die Gesamtzusammensetzung der Klebemasse.

Die Verankerung ist üblicherweise so stark, dass ein solches Klebeband problemlos von einer Rolle abgewickelt werden kann, ohne dass die Verankerung der Klebemasse reißt und es zum so genannten Umspulen der Klebemasse kommt (die Klebemasse befindet sich dann auf der Rückseite des Trägers).

Gemäß einer bevorzugten Ausführungsform liegt der Masseauftrag der Klebemasse auf die Trägerfolie zwischen 10 und 50 g/m²; vorzugsweise zwischen 20 und 40 g/m², besonders vorzugsweise zwischen 25 und 35 g/m².

Die Herstellung und Verarbeitung der Haftklebemasse kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebemasse aus der Schmelze, wobei insbesondere Batchverfahren oder kontinuierliche Verfahren eingesetzt werden können. Besonders vorteilhaft ist die kontinuierliche Fertigung der Haftklebemasse mit Hilfe eines Extruders.

Die so hergestellten Haftklebemasse kann dann mit den allgemein bekannten Verfahren auf den Träger gebracht werden. Bei Verarbeitung aus der Schmelze können dies Auftragsverfahren über eine Düse oder einen Kalander sein.

Bei Verfahren aus der Lösung sind Beschichtungen mit Rakeln, Messern oder Düsen bekannt, um nur einige wenige zu nennen.

Zur Erhöhung der Adhäsion zwischen der Klebemasse und der Trägerfolie kann die Trägerfolie zur Erhöhung der Oberflächenenergie einer Corona- oder Plasmabehandlung unterzogen werden, was eine sehr bevorzugte Variante darstellt.

Vorteilhaft ist die Verwendung einer Primerschicht zwischen Trägerfolie und Klebemasse zur Verbesserung der Haftung der Klebemasse auf der Folie und somit der rückstandsfreien Wiederabziehbarkeit nach der Anwendung.

Des Weiteren ist ein Ätzen der Folie vorteilhaft, um die Klebemasse verankern zu können.

Der allgemeine Ausdruck "Klebeband" umfasst im Sinne dieser Offenbarung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge.

Das Klebeband kann in Form einer Rolle, also in Form einer archimedischen Spirale auf sich selbst aufgerollt, hergestellt werden als auch klebemasseseitig eingedeckt mit Trennmaterialien wie silikonisiertem Papier oder silikonisierter Folie (dem Fachmann auch als Liner bekannt), die vor Gebrauch von der Klebemasseschicht abgezogen werden.

Als Trennmaterial eignet sich bevorzugt ein nicht-fusselndes Material wie eine Kunststofffolie oder ein gut verleimtes, langfaseriges Papier.

Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkenden Stoffen beziehungsweise zur Antihaftbeschichtung ausgerüstet sein.

Die Klebebänder weisen insbesondere Lauflängen von 1000 bis 30.000 m auf. Als Breite der Rollen werden üblicherweise 10, 15, 19, 25 und 30 mm gewählt.

Die Vorteile des erfindungsgemäßen Verfahrens sind aus technologischer und wirtschaftlicher Sicht immens. Das Verfahren stellt eine Alternative dar, nackte Fasern an der Oberfläche eines faserverstärkten Kunststoffbauteils zu erhalten, ohne dass am Bauteil nach Fertigstellung nachträglich chemisch oder physikalisch die Oberfläche beziehungsweise das Matrixmaterial abgetragen werden müssen. Die nackten Fasern des Fasergeleges (Mono- oder Multifilament) beziehungsweise die Stelle, die später mit einem anderen Bauteil verbunden werden soll, werden vor dem Harzinfusionsprozess mit dem Klebeband verklebt. Anschließend wird - wie oben beschrieben - der Harzinfusionsprozess mit der bevorzugten anschließenden Autoklavierung durchgeführt. Nach Entfernen des Bauteils aus dem Autoklav und aus dem Vakuumsack wird das aufgebrachte Klebeband ohne Probleme (rückstandsfrei) entfernt. Da das Klebeband direkt auf die Fasern geklebt wurde, sind diese nach Entfernung des Klebebands wieder an der Oberfläche zu sehen. Das heißt, das Klebeband hat diese während des gesamten Prozesses maskiert. Die verklebten Fasern werden nicht mit Harz angeflossen, so dass die maskierten Fasern nicht von ausgehärtetem Harz umgeben sind.

Das so gefertigte Bauteil kann in einem weiteren Verklebungsprozess ohne weitere Vorbereitung und/oder Aufarbeitung genutzt werden.

Das erfindungsgemäße Verfahren ist schnell, sicher, sauber und effizient.

Im Fall der bekannten Verfahren, insbesondere der Laserablation, sind zunächst Investitionen in ein entsprechendes Laserequipment und dem dazugehörigen Steuergerät notwendig. Des Weiteren ist gerade hochenergetische (und im schlimmsten Fall auch nicht-sichtbare) Laserstrahlung sehr gefährlich und kann bei kleinsten Reflexionen in die Augen zu Erblindungen führen. Daher muss weiterhin Geld in den Arbeitsschutz investiert werden. Dies fängt mit einer kompletten Kapselung des Systems an. Dieses muss in einem separaten, absolut dichtem Raum (mit u.U. extra gehärteten Wänden) stehen. Zudem muss jeglicher Gegenstand entfernt werden, der zu Reflexionen führen kann. Des Weiteren müssen alle Produkte (partikulär, flüssig, gasförmig) effizient abgesaugt/entfernt und entsorgt werden. Ein solcher Schutzaufwand beziehungsweise die notwendigen Investitionen sind an sich mit sehr hohen Kosten verbunden. Zuweilen dauern aber auch die Laserbehandlung oder ein Schleif- beziehungsweise Ätzprozess lange, und Standzeiten sind immer mit weiteren, durch das erfindungsgemäße Verfahren vermeidbare Kosten verbunden.

Im Folgenden wird die Erfindung anhand mehrerer Beispiele näher erläutert, ohne auch hiermit dieselbe in irgendeiner Art und Weise einschränken zu wollen.

### Beispiele

Der Vakuum- und Autoklavierprozess, wie er üblicherweise bei der Herstellung von Kompositbauteilen eingesetzt wird, wird mittels einer Vakuumheißpresse simuliert. Der Pressenraum ist evakuierbar (Vakuum) und die Pressbacken sind beheizbar (Temperatur). Zusätzlich lässt sich eine zu untersuchende Probe mit einem Druck durch die Pressbacken beaufschlagen (Druck). Hier kann auf verschiedenen Substraten die rückstandsfreie Wiederablösbarkeit des Klebebands untersucht werden.

Zusätzlich können Glas-/Kohlefasern mit dem Klebeband beklebt und mit Harz/Härter getränkt und ausgehärtet werden. Es wird somit die rückstandsfreie Wiederablösbarkeit auf Originalsubstrat untersucht.

### Beispiel 1

- 30 g/m² verlackende Acrylatmasse
   20 Gew.-% Isobornylacrylat
   20 Gew.-% 2-Hydroxyethylacrylat
   40 Gew.-% Butylacrylat
   20 Gew.-% Ethylhexylacrylat
- 50 µm HDPE-Folie (100 Gew.-% HDPE)
- Aktivierung des Trägers mittels Coronabehandlung

### Gegenbeispiel 1

- 30 g/m² verlackende Acrylatmasse bestehend aus
   20 Gew.-% Isobornylacrylat
   20 Gew.-% 2-Hydroxyethylacrylat
   40 Gew.-% Butylacrylat
   20 Gew.-% Ethylhexylacrylat
- 50 µm BOPP-Folie
- Aktivierung des Trägers mittels Coronabehandlung

Das Klebeband basierend gemäß Beispiel 1 lässt sich nach den gegebenen Bedingungen von 230 °C, 24 h und 18 bar Druck rückstandsfrei entfernen.

Im Fall des Gegenbeispiels 1 beobachtet man beim Ablösen des Klebebands, dass sich der Träger nicht einem Stück abziehen lässt, da dieser versprödet ist.

### Beispiel 2

- 30 g/m² verlackende Acrylatmasse bestehend aus
   48,5 Gew.-% Butylacrylat
   48,5 Gew.-% Ethylhexylacrylat
   1 Gew.-% Acrylsäure
   2 Gew.-% Glycidylmethylacrylat
- 50 µm PTFE (Polytetrafluorethylen)-Folie (100 Gew.-%)
- Aktivierung des Trägers mittels Coronabehandlung

### Gegenbeispiel 2

- 30 g/m² verlackende Acrylatmasse bestehend aus
   48,5 Gew.-% Butylacrylat
   48,5 Gew.-% Ethylhexylacrylat
   1 Gew.-% Acrylsäure
   2 Gew.-% Glycidylmethylacrylat
- 50 µm PET (Polyehtylenterephthalat)-Folie (100 Gew.-%)
- Aktivierung des Trägers mittels Coronabehandlung

Das Klebeband basierend gemäß Beispiel 2 lässt sich nach den gegebenen Bedingungen von 230 °C, 24 h und 18 bar Druck rückstandsfrei entfernen.

Im Fall des Gegenbeispiels 2 beobachtet man beim Ablösen des Klebebands, dass sich der Träger nicht einem Stück abziehen lässt, da dieser versprödet ist.

### Beispiel 3

30 g/m² Acrylatmasse bestehend aus
5 Gew.-% Acrylsäure
47,5 Gew.-% Butylacrylat
47,5 Gew.-% Ethylhexylacrylat
3 Gew.-Teile Desmodur BL 3475 BA/SN auf 100 Gew.-Teile Monomere
   - 50 µm HDPE-Folie (100 Gew.-% HDPE)
   - Aktivierung des Trägers mittels Coronabehandlung

### Gegenbeispiel 3

30 g/m² Acrylatmasse bestehend aus
5 Gew.-% Acrylsäure
47,5 Gew.-% Butylacrylat
47,5 Gew.-% Ethylhexylacrylat
3 Gew.-Teile Desmodur BL 3475 BA/SN auf 100 Gew.-Teile Monomere
   - 50 µm BOPP-Folie
   - Aktivierung des Trägers mittels Coronabehandlung

Das Klebeband basierend gemäß Beispiel 3 lässt sich nach den gegebenen Bedingungen von 230 °C, 24 h und 18 bar Druck rückstandsfrei entfernen.

Im Fall des Gegenbeispiels 3 beobachtet man beim Ablösen des Klebebands, dass sich der Träger nicht einem Stück abziehen lässt, da dieser versprödet ist.

Im Folgenden wird ein Klebeband anhand einer Figur näher erläutert, ohne damit eine wie auch immer geartete Einschränkung hervorrufen zu wollen.

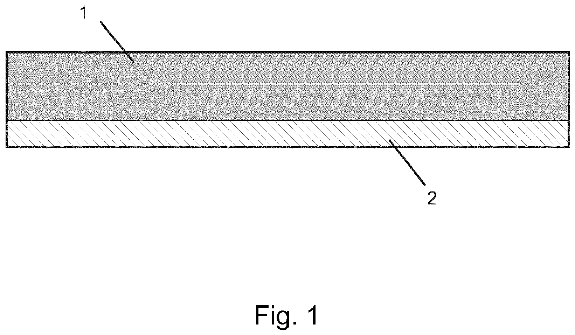

Es zeigt die Figur 1 das Klebeband im seitlichen Schnitt.

In der Figur 1 ist im Schnitt in Querrichtung (Querschnitt) das Klebeband gezeigt, das aus einem Folienträger 1 besteht, auf den einseitig eine Schicht einer selbstklebenden Beschichtung 2 aufgebracht ist.

## Patentansprüche

1. Verfahren zum Verbinden zweier faserverstärkter Kunststoffbauteile, umfassend die folgenden Schritte:
• Herstellen eines ersten faserverstärkten Kunststoffbauteils, indem ein Gelege aus Fasermatten vorgelegt wird, das mit einem Harz-Härter-Gemisch getränkt wird, das seinerseits anschließend ausgehärtet wird, wobei der Teil der Oberfläche, im Folgenden auch Fügefläche genannt, des ersten faserverstärkten Kunststoffbauteils, der später mit dem zweiten faserverstärkten Kunststoffbauteil verklebt werden soll, vor der Tränkung der Fasermatten mit dem Harz-Härter-Gemisch mit einem Klebeband maskiert wird
• Herstellen eines zweiten faserverstärkten Kunststoffbauteils nach dem oben genannten Schritten, wobei der Teil der Oberfläche des zweiten faserverstärkten Kunststoffbauteils, der später mit dem ersten faserverstärkten Kunststoffbauteil verklebt werden soll, ebenfalls vor der Tränkung der Fasermatten mit dem Harz-Härter-Gemisch mit einem Klebeband maskiert wird
• Entfernen der Klebebänder von den beiden fertigen faserverstärkten Kunststoffbauteilen
• Inkontaktbringen der beiden Fügeflächen
• Einbringen eines Harz-Härter-Gemisches zwischen den beiden Fügeflächen
• Aushärten des Harz-Härter-Gemisches
wobei das Klebeband eine Trägerfolie (1) aufweist, auf die einseitig eine Klebemasse (2), insbesondere Selbstklebemasse aufgebracht ist und wobei
die Trägerfolie aus Fluorpolymeren, aus Polyethylenpolymeren, aus unverstrecktem Polypropylen oder aus Metall besteht und
die Klebemasse eine Acrylat- oder Silikonklebemasse ist.

2. Verfahren nach Anspruch 1,
**dadurch gekennzeichnet, dass**
die Trägerfolie zu 90 Gew.-%, vorzugsweise zu 95 Gew.-% ein oder mindestens zwei Fluorpolymere, jeweils bezogen auf die Gesamtzusammensetzung der Trägerfolie, enthält oder die die Trägerfolie bildenden Polymere zu 100 Gew.-% aus einem oder mindestens zwei Fluorpolymeren bestehen.

3. Verfahren nach den Ansprüchen 1 oder 2,
**dadurch gekennzeichnet, dass**
für die Trägerfolie als Fluorpolymere PTFE, PFA oder FEP oder Gemische aus zwei oder mehreren der genannten Fluorpolymere eingesetzt werden.

4. Verfahren nach den Ansprüchen 1 oder 2,
**dadurch gekennzeichnet, dass**
für die Trägerfolie Polyethylen eingesetzt wird, insbesondere HDPE, LDPE und/oder LLDPE.

5. Verfahren nach den Ansprüchen 1 oder 2,
**dadurch gekennzeichnet, dass**
die Trägerfolie unverstrecktes Polypropylen enthält oder aus unverstrecktem Polypropylen besteht.

6. Verfahren nach zumindest einem der vorherigen Ansprüche,
**dadurch gekennzeichnet, dass**
die Trägerfolie aus einer einzigen Folienlage besteht.

7. Verfahren nach zumindest einem der vorherigen Ansprüche,
**dadurch gekennzeichnet, dass**
die Dicke der Trägerfolie zwischen 30 und 200 µm, vorzugsweise zwischen 40 und 100 µm, weiter vorzugsweise zwischen 40 und 60 µm liegt.

8. Verfahren nach zumindest einem der vorherigen Ansprüche,
**dadurch gekennzeichnet, dass**
die auf der Trägerfolie aufgebrachte Klebemasse eine Haftklebemasse auf Acrylat- oder Silikonbasis ist.

9. Verfahren nach zumindest einem der vorherigen Ansprüche,
**dadurch gekennzeichnet, dass**
für die acrylatbasierende Klebemasse ein Polyacrylat eingesetzt wird, welches auf die folgende Eduktmischung, enthaltend Monomere der folgenden Zusammensetzung, zurückgeführt werden kann:
A1) Acrylsaureester und/oder Methacrylsaureester der folgenden Formel
CH₂=C(R¹)(COOR²)
wobei R¹ = H oder CH₃ und R² eine Alkylkette mit 1 bis 14 C-Atomen ist, mit einem Anteil von 55 bis 98 Gew.-%,
A2) Acrylate und/oder Methacrylate, deren Alkoholkomponente zumindest eine primäre Hydroxyl- oder Carboxyl-Gruppe enthält und/oder mit Acrylaten copolymerisierbare Vinylverbindungen, die zumindest eine primäre Hydroxyl- oder Carboxyl-Gruppe enthalten, mit einem Anteil von 1 bis 20 Gew.-%,
A3) mehrfachfunktionelle Isocyanat-Vernetzer, welche mit thermisch reversiblen Schutzgruppen blockiert vorliegen, mit einem Anteil von 1 bis 10 Gew.-%,
A4) und, sofern sich die Anteile von A1), A2) und A3) nicht zu 100 Gew.-% addieren, olefinisch ungesättigte Monomere mit funktionellen Gruppen, mit einem Anteil von 0 bis 15 Gew.-%.

10. Verfahren nach zumindest einem der vorherigen Ansprüche,
**dadurch gekennzeichnet, dass**
für die acrylatbasierende Klebemasse ein Polyacrylat eingesetzt wird, welches auf die folgende Eduktmischung, enthaltend Monomere der folgenden Zusammensetzung, zurückgeführt werden kann:
A1) Acrylsaureester und/oder Methacrylsaureester der folgenden Formel
CH₂=C(R¹)(COOR²)
wobei R¹ = H oder CH₃ und R² eine Alkylkette mit 1 bis 14 C-Atomen ist, mit einem Anteil von 75 bis 98 Gew.-%,
A2) Acrylate und/oder Methacrylate, deren Alkoholkomponente zumindest eine primäre Hydroxyl- oder Carboxyl-Gruppe enthält, und/oder mit Acrylaten copolymerisierbare Vinylverbindungen, die zumindest eine primäre Hydroxyl- oder Carboxyl-Gruppe enthalten, mit einem Anteil von 1 bis 5 Gew.-%,
A3) Acrylate und/oder Methacrylate, deren Alkoholkomponente zumindest eine Epoxy-Gruppe enthält, und/oder mit Acrylaten copolymerisierbare Vinylverbindungen, die zumindest eine Epoxy-Gruppe enthalten, mit einem Anteil von 1 bis 5 Gew.-%,
A4) und, sofern sich die Anteile von A1), A2) und A3) nicht zu 100 Gew.-% addieren, olefinisch ungesättigte Monomere mit funktionellen Gruppen, mit einem Anteil von 0 bis 15 Gew.-%.

11. Verfahren nach zumindest einem der vorherigen Ansprüche,
**dadurch gekennzeichnet, dass**
für die acrylatbasierende Klebemasse ein Polyacrylat eingesetzt wird, welches auf die folgende Eduktmischung, enthaltend Monomere der folgenden Zusammensetzung, zurückgeführt werden kann:
A1) Acrylsäureester und/oder Methacrylsäureester der folgenden Formel
CH₂=C(R¹)(COOR²)
wobei R¹ = H oder CH₃ und R² ein Alkylrest mit 1 bis 14 C-Atomen ist, mit einem Anteil von 50 bis 95 Gew.-%,
A2) Acrylate und/oder Methacrylate, deren Alkoholkomponente zumindest eine primäre Hydroxyl- oder Carboxyl-Gruppe enthält, und/oder mit Acrylaten copolymerisierbare Vinylverbindungen, die zumindest eine primäre Hydroxyl- oder Carboxyl-Gruppe enthalten, mit einem Anteil von 5 bis 30 Gew.-%,
A3) Acrylate und/oder Methacrylate, deren Alkoholkomponente zumindest eine Epoxy-Gruppe enthält, und/oder mit Acrylaten copolymerisierbare Vinylverbindungen, die zumindest eine Epoxy-Gruppe enthalten, mit einem Anteil von 0 bis 5 Gew.-%,
A4) und, sofern sich die Anteile von A1), A2) und A3) nicht zu 100 Gew.-% addieren, olefinisch ungesättigte Monomere mit funktionellen Gruppen, mit einem Anteil von 0 bis 15 Gew.-%.

12. Verfahren nach zumindest einem der vorherigen Ansprüche,
**dadurch gekennzeichnet, dass**
der Masseauftrag der Klebemasse auf die Trägerfolie zwischen 10 und 50 g/m²; vorzugsweise zwischen 20 und 40 g/m², besonders vorzugsweise zwischen 25 und 35 g/m² beträgt.

## Claims

1. Method for joining two fiber-reinforced plastic components, comprising the following steps:
• producing a first fiber-reinforced plastic component by introducing a laid scrim of fiber mats which is impregnated with a resin/curing agent mixture, which in turn is subsequently cured; that part of the surface, also called joining surface below, of the first fiber-reinforced plastic component which is later to be bonded to the second fiber-reinforced plastic component is masked with an adhesive tape before the fiber mats are impregnated with the resin/curing agent mixture,
• producing a second fiber-reinforced plastic component according to the steps specified above; that part of the surface of the second fiber-reinforced plastic component that is later to be bonded to the first fiber-reinforced plastic component is likewise masked with an adhesive tape before the fiber mats are impregnated with the resin/curing agent mixture,
• removing the adhesive tapes from the two completed fiber-reinforced plastic components,
• contacting the two joining surfaces,
• introducing a resin/curing agent mixture between the two joining surfaces,
• curing the resin/curing agent mixture,
where the adhesive tape has a carrier film (1) which bears on one side an applied adhesive composition (2), more particularly a self-adhesive composition, and where the carrier film consists of fluoropolymers, of polyethylene polymers, of unoriented polypropylene or of metal, and
the adhesive composition is an acrylate or silicone adhesive composition.

2. Method according to Claim 1,
**characterized in that**
the carrier film comprises to an extent of 90 wt%, preferably 95 wt%, one or at least two fluoropolymers, based in each case on the total composition of the carrier film, or the polymers forming the carrier film consist to an extent of 100 wt% of one or at least two fluoropolymers.

3. Method according to Claim 1 or 2,
**characterized in that**
fluoropolymers used for the carrier film are PTFE, PFA or FEP, or mixtures of two or more of said fluoropolymers.

4. Method according to Claim 1 or 2,
**characterized in that**
polyethylene is used for the carrier film, more particularly HDPE, LDPE and/or LLDPE.

5. Method according to Claim 1 or 2,
**characterized in that**
the carrier film comprises unoriented polypropylene or consists of unoriented polypropylene.

6. Method according to at least one of the preceding claims,
**characterized in that**
the carrier film consists of a single film ply.

7. Method according to at least one of the preceding claims,
**characterized in that**
the thickness of the carrier film is between 30 and 200 µm, preferably between 40 and 100 µm, more preferably between 40 and 60 µm.

8. Method according to at least one of the preceding claims,
**characterized in that**
the adhesive composition applied on the carrier film is an acrylate-based or silicone-based pressure-sensitive adhesive composition.

9. Method according to at least one of the preceding claims,
**characterized in that**
for the acrylate-based adhesive composition, a polyacrylate is used which can be traced back to the following reactant mixture, comprising monomers of the following composition:
A1) acrylic esters and/or methacrylic esters of the following formula
CH₂=C(R¹)(COOR²)
where R¹ = H or CH₃ and R² is an alkyl chain having 1 to 14 carbon atoms, with a fraction of 55 to 98 wt%,
A2) acrylates and/or methacrylates whose alcohol component contains at least one primary hydroxyl or carboxyl group, and/or vinyl compounds which are copolymerizable with acrylates and which contain at least one primary hydroxyl or carboxyl group, with a fraction of 1 to 20 wt%,
A3) polyfunctional isocyanate crosslinkers which are blocked with thermally reversible protecting groups, with a fraction of 1 to 10 wt%,
A4) and, if the fractions of A1), A2) and A3) do not add up to 100 wt%, olefinically unsaturated monomers having functional groups, with a fraction of 0 to 15 wt%.

10. Method according to at least one of the preceding claims,
**characterized in that**
for the acrylate-based adhesive composition, a polyacrylate is used which can be traced back to the following reactant mixture, comprising monomers of the following composition:
A1) acrylic esters and/or methacrylic esters of the following formula
CH₂=C(R¹)(COOR²)
where R¹ = H or CH₃ and R² is an alkyl chain having 1 to 14 carbon atoms, with a fraction of 75 to 98 wt%,
A2) acrylates and/or methacrylates whose alcohol component contains at least one primary hydroxyl or carboxyl group, and/or vinyl compounds which are copolymerizable with acrylates and which contain at least one primary hydroxyl or carboxyl group, with a fraction of 1 to 5 wt%,
A3) acrylates and/or methacrylates whose alcohol component contains at least one epoxy group, and/or vinyl compounds which are copolymerizable with acrylates and which contain at least one epoxy group, with a fraction of 1 to 5 wt%,
A4) and, if the fractions of A1), A2) and A3) do not add up to 100 wt%, olefinically unsaturated monomers having functional groups, with a fraction of 0 to 15 wt%.

11. Method according to at least one of the preceding claims,
**characterized in that**
for the acrylate-based adhesive composition, a polyacrylate is used which can be traced back to the following reactant mixture, comprising monomers of the following composition:
A1) acrylic esters and/or methacrylic esters of the following formula
CH₂=C(R¹)(COOR²)
where R¹ = H or CH₃ and R² is an alkyl radical having 1 to 14 carbon atoms, with a fraction of 50 to 95 wt%,
A2) acrylates and/or methacrylates whose alcohol component contains at least one primary hydroxyl or carboxyl group, and/or vinyl compounds which are copolymerizable with acrylates and which contain at least one primary hydroxyl or carboxyl group, with a fraction of 5 to 30 wt%,
A3) acrylates and/or methacrylates whose alcohol component contains at least one epoxy group, and/or vinyl compounds which are copolymerizable with acrylates and which contain at least one epoxy group, with a fraction of 0 to 5 wt%,
A4) and, if the fractions of A1), A2) and A3) do not add up to 100 wt%, olefinically unsaturated monomers having functional groups, with a fraction of 0 to 15 wt%.

12. Method according to at least one of the preceding claims,
**characterized in that**
the coat weight of the adhesive composition on the carrier film is between 10 and 50 g/m²; preferably between 20 and 40 g/m², more preferably between 25 and 35 g/m².

## Revendications

1. Procédé de liaison de deux composants en matière plastique renforcés par des fibres, comprenant les étapes suivantes :
- la fabrication d'un premier composant en matière plastique renforcé par des fibres, par pose d'une nappe de mats de fibres, qui est imprégnée avec un mélange résine-agent de durcissement, qui est de son côté ensuite durci, la partie de la surface, par la suite également nommée surface d'assemblage, du premier composant en matière plastique renforcé par des fibres, qui doit ultérieurement être collée avec le deuxième composant en matière plastique renforcé par des fibres, étant masquée avec une bande adhésive avant l'imprégnation des mats de fibres avec le mélange résine-agent de durcissement,
- la fabrication d'un deuxième composant en matière plastique renforcé par des fibres selon les étapes indiquées ci-dessus, la partie de la surface du deuxième composant en matière plastique renforcé par des fibres, qui doit ultérieurement être collée avec le premier composant en matière plastique renforcé par des fibres, étant également masquée avec une bande adhésive avant l'imprégnation des mats de fibres avec le mélange résine-agent de durcissement,
- l'élimination des bandes adhésives des deux composants en matière plastique renforcés par des fibres finis,
- la mise en contact des deux surfaces d'assemblage,
- l'introduction d'un mélange résine-agent de durcissement entre les deux surfaces d'assemblage,
- le durcissement du mélange résine-agent de durcissement,
la bande adhésive comprenant un film support (1), sur lequel une matière adhésive (2), notamment une matière auto-adhésive, est appliquée sur un côté, et le film support étant constitué par des polymères fluorés, des polymères de polyéthylène, du polypropylène non étiré ou un métal, et
la matière adhésive étant une matière adhésive à base d'acrylate ou de silicone.

2. Procédé selon la revendication 1, **caractérisé en ce que** le film support contient à hauteur de 90 % en poids, de préférence à hauteur de 95 % en poids, un ou au moins deux polymères fluorés, à chaque fois par rapport à la composition totale du film support,
ou les polymères formant le film support sont constitués à hauteur de 100 % en poids par un ou au moins deux polymères fluorés.

3. Procédé selon la revendication 1 ou 2, **caractérisé en ce que** du PTFE, du PFA ou du FEP ou des mélanges de deux ou plus des polymères fluorés indiqués sont utilisés en tant que polymères fluorés pour le film support.

4. Procédé selon la revendication 1 ou 2, **caractérisé en ce que** du polyéthylène, notamment de l'HDPE, du LDPE et/ou du LLDPE, est utilisé pour le film support.

5. Procédé selon la revendication 1 ou 2, **caractérisé en ce que** le film support contient du polypropylène non étiré ou est constitué par du polypropylène non étiré.

6. Procédé selon au moins l'une quelconque des revendications précédentes, **caractérisé en ce que** le film support est constitué par une couche de film unique.

7. Procédé selon au moins l'une quelconque des revendications précédentes, **caractérisé en ce que** l'épaisseur du film support est comprise entre 30 et 200 µm, de préférence entre 40 et 100 µm, de manière davantage préférée entre 40 et 60 µm.

8. Procédé selon au moins l'une quelconque des revendications précédentes, **caractérisé en ce que** la matière adhésive appliquée sur le film support est une matière adhésive de contact à base d'acrylate ou de silicone.

9. Procédé selon au moins l'une quelconque des revendications précédentes, **caractérisé en ce qu'**un polyacrylate qui provient du mélange de réactifs suivant, contenant des monomères de la composition suivante, est utilisé pour la matière adhésive à base d'acrylate :
A1) des esters de l'acide acrylique et/ou des esters de l'acide méthacrylique de la formule suivante :
CH₂=C(R¹)(COOR²)
avec R¹ = H ou CH₃ et R² étant une chaîne alkyle de 1 à 14 atomes C, en une proportion de 55 à 98 % en poids,
A2) des acrylates et/ou des méthacrylates, dont le composant alcool contient au moins un groupe hydroxyle ou carboxyle primaire et/ou des composés de vinyle copolymérisables avec des acrylates, qui contiennent au moins un groupe hydroxyle ou carboxyle primaire, en une proportion de 1 à 20 % en poids,
A3) des agents de réticulation isocyanate polyfonctionnels, qui sont bloqués avec des groupes protecteurs thermiquement réversibles, en une proportion de 1 à 10 % en poids,
A4) et, si la somme des proportions de A1), A2) et A3) n'est pas de 100 % en poids, des monomères oléfiniquement insaturés contenant des groupes fonctionnels, en une proportion de 0 à 15 % en poids.

10. Procédé selon au moins l'une quelconque des revendications précédentes, **caractérisé en ce qu'**un polyacrylate qui provient du mélange de réactifs suivant, contenant des monomères de la composition suivante, est utilisé pour la matière adhésive à base d'acrylate :
A1) des esters de l'acide acrylique et/ou des esters de l'acide méthacrylique de la formule suivante :
CH₂=C(R¹)(COOR²)
avec R¹ = H ou CH₃ et R² étant une chaîne alkyle de 1 à 14 atomes C, en une proportion de 75 à 98 % en poids,
A2) des acrylates et/ou des méthacrylates, dont le composant alcool contient au moins un groupe hydroxyle ou carboxyle primaire et/ou des composés de vinyle copolymérisables avec des acrylates, qui contiennent au moins un groupe hydroxyle ou carboxyle primaire, en une proportion de 1 à 5 % en poids,
A3) des acrylates et/ou des méthacrylates, dont le composant alcool contient au moins un groupe époxy, et/ou des composés de vinyle copolymérisables avec des acrylates, qui contiennent au moins un groupe époxy, en une proportion de 1 à 5 % en poids,
A4) et, si la somme des proportions de A1), A2) et A3) n'est pas de 100 % en poids, des monomères oléfiniquement insaturés contenant des groupes fonctionnels, en une proportion de 0 à 15 % en poids.

11. Procédé selon au moins l'une quelconque des revendications précédentes, **caractérisé en ce qu'**un polyacrylate qui provient du mélange de réactifs suivant, contenant des monomères de la composition suivante, est utilisé pour la matière adhésive à base d'acrylate :
A1) des esters de l'acide acrylique et/ou des esters de l'acide méthacrylique de la formule suivante :
CH₂=C(R¹)(COOR²)
avec R¹ = H ou CH₃ et R² étant une chaîne alkyle de 1 à 14 atomes C, en une proportion de 50 à 95 % en poids,
A2) des acrylates et/ou des méthacrylates, dont le composant alcool contient au moins un groupe hydroxyle ou carboxyle primaire et/ou des composés de vinyle copolymérisables avec des acrylates, qui contiennent au moins un groupe hydroxyle ou carboxyle primaire, en une proportion de 5 à 30 % en poids,
A3) des acrylates et/ou des méthacrylates, dont le composant alcool contient au moins un groupe époxy, et/ou des composés de vinyle copolymérisables avec des acrylates, qui contiennent au moins un groupe époxy, en une proportion de 0 à 5 % en poids,
A4) et, si la somme des proportions de A1), A2) et A3) n'est pas de 100 % en poids, des monomères oléfiniquement insaturés contenant des groupes fonctionnels, en une proportion de 0 à 15 % en poids.

12. Procédé selon au moins l'une quelconque des revendications précédentes, **caractérisé en ce que** la masse appliquée de la matière adhésive sur le film support est comprise entre 10 et 50 g/m², de préférence entre 20 et 40 g/m², de manière particulièrement préférée entre 25 et 35 g/m².
